# EUROPÄISCHE PATENTSCHRIFT

(11) **EP 1 402 739 B1**
(45) Veröffentlichungstag und Bekanntmachung des Hinweises auf die Patenterteilung: **25.05.2005**
(21) Anmeldenummer: 02758214.7
(22) Anmeldetag: 04.06.2002
(51) Int. Cl.: H04N 9/31, H04N 5/74

(54) **ANORDNUNG ZUM PROJIZIEREN EINES BILDES AUF EINE PROJEKTIONSFLÄCHE**
ASSEMBLY FOR PROJECTING AN IMAGE ONTO A PROJECTION SURFACE
DISPOSITIF POUR PROJETER UNE IMAGE SUR UNE SURFACE DE PROJECTION

(30) Priorität: 07.06.2001 DE 10127621
(43) Veröffentlichungstag der Anmeldung: 31.03.2004
(73) Patentinhaber: CARL ZEISS JENA GmbH, 07745 Jena (DE)
(72) Erfinder: MÜHLHOFF, Dirk, 07751 Kunitz (DE); RUDOLPH, Günter, 07743 Jena (DE); PIEHLER, Eberhard, 07778 Lehesten (DE); PRETORIUS, Marco, 73447 Oberkochen (DE)
(74) Vertreter: Grimm, Christian
(86) Internationale Anmeldenummer: PCT/EP2002/006124
(87) Internationale Veröffentlichungsnummer: WO 2002/100113

(56) Entgegenhaltungen:
- US-A- 5 239 322
- US-A- 5 633 755

## Beschreibung

Die Erfindung bezieht sich auf eine Anordnung zum Projizieren eines Bildes auf eine Projektionsfläche, mit einer Lichtquelle, die Licht abgibt, mit dem ein leuchtendes Feld erzeugbar ist, einem reflektiven Lichtmodulator, der mit vom leuchtenden Feld ausgehenden Licht beaufschlagbar ist und dieses zum Erzeugen eines Bildes moduliert, und weiter mit einer dem Lichtmodulator nachgeschalteten Projektionsoptik, die mit dem modulierten Licht beaufschlagbar ist, um das Bild auf die Projektionsfläche zu projizieren.

Bei einer solchen Anordnung, die beispielsweise in US 5,633,755, US 5,239,322 und EP 0 734 183 A2 beschrieben ist, ist die notwendige Schnittweite der Projektionsoptik sehr groß, da aufgrund der Verwendung eines reflektiven Lichtmodulators die Optikelemente zur Beleuchtung des Lichtmodulators und die Projektionsoptik auf der gleichen Seite des Lichtmodulators anzuordnen sind. Dies führt zu einer sehr aufwendig zu gestaltenden Projektionsoptik mit vielen Linsen, wodurch die Projektionsoptik teuer und auch schwer wird.

Ausgehend hiervon ist es Aufgabe der vorliegenden Erfindung, eine Anordnung der eingangs genannten Art zum Projizieren eines Bildes auf eine Projektionsfläche so zu verbessern, daß ihr Aufbau vereinfacht ist.

Die Aufgabe wird bei einer Anordnung der eingangs genannten Art zum Projizieren eines Bildes auf eine Projektionsfläche durch eine Anordnung gemäß Anspruch 1 gelöst, be welcher dem Lichtmodulator eine Optikeinrichtung vorgeschaltet ist, die einerseits das vom leuchtenden Feld kommende Licht auf den Lichtmodulator und andererseits das mittels des Lichtmodulators modulierte Licht in eine der Projektionsoptik vorgeschaltete Zwischenbildebene abbildet, um in der Zwischenbildebene ein Zwischenbild zu erzeugen, das von der Projektionsoptik als das Bild auf die Projektionsfläche projiziert wird.

Durch das Vorsehen der Optikeinrichtung, die das Zwischenbild (bevorzugt ein reelles Zwischenbild) in der vor der Projektionsoptik liegenden Zwischenbildebene erzeugt, wobei die Zwischenbildebene bevorzugt auch unmittelbar vor der Projektionsoptik liegen kann, ist die erforderliche Schnittweite der Projektionsoptik bei der erfindungsgemäßen Anordnung sehr viel geringer als bei der Anordnung der eingangs genannten Art. Dadurch sind natürlich die optischen Anforderungen für die Projektionsoptik wesentlich vermindert, so daß auch der Aufbau der Projektionsoptik deutlich vereinfacht ist. Insbesondere ist die Anzahl der notwendigen Linsen der Projektionsoptik geringer, wodurch ihr Gewicht vorteilhaft reduziert werden kann.

Des weiteren kann die Projektionsoptik auch völlig unabhängig von der restlichen Anordnung ausgelegt und entworfen werden, da sie das in der Zwischenbildebene erzeugte Zwischenbild und nicht den bildgebenden Bereich des Lichtmodulators auf die Projektionsfläche abbilden muß.

Ferner kann bei der erfindungsgemäßen Anordnung die Projektionsoptik auch leicht durch eine andere Projektionsoptik ersetzt werden, so daß die erfindungsgemäße Anordnung in einfachster Art und Weise an unterschiedliche Rahmenbedingungen, wie z.B. eine Weitwinkelprojektion oder eine Projektion, bei der die optische Achse der Projektionsoptik einen Winkel ungleich 90° mit der Projektionsfläche einschließt, angepaßt werden kann.

Da die Optikeinrichtung das leuchtende Feld auf den Lichtmodulator abbildet, übernimmt sie somit vollständig die Funktion einer ansonsten separat vorzusehenden Beleuchtungsoptik, die zwischen dem leuchtenden Feld und dem Lichtmodulator angeordnet ist und zum Ausleuchten des Lichtmodulators dient, so daß eine solche Beleuchtungsoptik bei der erfindungsgemäßen Anordnung nicht mehr vorgesehen werden muß.

Die Lichtmodulatoren, die bevorzugt reflektive Lichtmodulatoren sind (mit diesen läßt sich vorteilhaft eine sehr kompakte Anordnung realisieren), weisen einen bildgebenden Bereich (beispielsweise rechteckig) mit einer Mehrzahl von unabhängig voneinander ansteuerbaren Bildpixeln auf, von denen das einfallende Licht moduliert abgegeben wird (z.B. hinsichtlich seines Ausfallwinkels oder seiner Polarisationsrichtung), wobei abgegebenes Licht in einem ersten Modulationszustand für hell geschaltete Bildpunkte und abgegebenes Licht in einem zweiten Modulationszustand für dunkel geschaltete Bildpunkte verwendet wird, so daß in diesem Sinne auf den Lichtmodulatoren bzw. deren bildgebenden Bereichen Bilder (bzw. Farbteilbilder) erzeugt werden. Natürlich können die Lichtmodulatoren auch so ausgebildet sein, daß nur von den Bildpixeln der hell zu schaltenden Bildpunkte Licht abgegeben wird, während von den Bildpixeln der dunkel zu schaltenden Bildpunkte kein Licht ausgeht.

Die Lichtmodulatoren, die bevorzugt reflektive Lichtmodulatoren sind (mit diesen läßt sich vorteilhaft eine sehr kompakte Anordnung realisieren), weisen einen bildgebenden Bereich (beispielsweise rechteckig) mit einer Mehrzahl von unabhängig voneinander ansteuerbaren Bildpixeln auf, von denen das einfallende Licht moduliert abgegeben wird (z.B. hinsichtlich seines Ausfallwinkels oder seiner Polarisationsrichtung), wobei abgegebenes Licht in einem ersten Modulationszustand für hell geschaltete Bildpunkte und abgegebenes Licht in einem zweiten Modulationszustand für dunkel geschaltete Bildpunkte verwendet wird, so daß in diesem Sinne auf den Lichtmodulatoren bzw. deren bildgebenden Bereichen Bilder (bzw. Farbteilbilder) erzeugt werden. Natürlich können die Lichtmodulatoren auch so ausgebildet sein, daß nur von den Bildpixeln der hell zu schaltenden Bildpunkte Licht abgegeben wird, während von den Bildpixeln der dunkel zu schaltenden Bildpunkte kein Licht ausgeht.

In einer bevorzugten Weiterbildung der erfindungsgemäßen Anordnung ist die Optikeinrichtung eine 1:1-Abbildungsoptik. Damit wird vorteilhaft erreicht, daß das Zwischenbild die gleiche Größe aufweist wie das auf dem Lichtmodulator eingestellte Bild, wodurch der Linsendurchmesser der Linsen der Projektionsoptik klein gehalten werden kann.

Insbesondere kann die Optikeinrichtung bei der erfindungsgemäßen Anordnung symmetrisch ausgebildet sein, wodurch einerseits ihre Herstellung vereinfacht wird und andererseits die durch sie erzeugten Abbildungsfehler sehr klein gehalten werden können (im optimalen Fall sind sie praktisch null).

Die Optikeinrichtung der erfindungsgemäßen Anordnung kann so ausgebildet sein, daß der bildgebende Bereich des Lichtmodulators verkleinert in die Zwischenbildebene abgebildet wird. Dadurch können die optischen Elemente der Projektionsoptik kleiner sein, wodurch eine Gewichtseinsparung erzielt wird und die Fertigung der Projektionsoptik erleichtert wird.

Bevorzugt weist die Optikeinrichtung bei der erfindungsgemäßen Anordnung einen gekrümmten Spiegel auf. Somit ist der Strahlengang in der Optikeinrichtung gefaltet, so daß die erfindungsgemäße Anordnung sehr kompakt gebildet werden kann. Dabei kann die Optikeinrichtung so ausgebildet sein, daß die restlichen Optikelemente der Optikeinrichtung aufgrund der Faltung des Strahlengangs durch den Spiegel bei jeder Abbildung zweimal durchlaufen werden, so daß die Anzahl der benötigten Optikelemente deutlich verringert werden kann. Dies ermöglicht eine leichtere und schnellere Herstellung der Optikeinrichtung der erfindungsgemäßen Anordnung.

Besonders vorteilhaft ist es, wenn die Optikeinrichtung mit dem gekrümmten Spiegel symmetrisch ausgebildet ist, da in diesem Fall die durch sie erzeugten Abbildungsfehler praktisch null und somit nicht vorhanden sind. Des weiteren trägt der gekrümmte Spiegel neben der durch ihn bewirkten Faltung des Strahlengangs auch noch zur Abbildung bei, so daß deshalb die Anzahl der optischen Elemente der Optikeinrichtung auch noch verringert werden kann.

Eine weitere vorteilhafte Ausgestaltung der erfindungsgemäßen Anordnung besteht darin, daß der Spiegel der Optikeinrichtung eine sphärische Krümmung aufweist. Dies vereinfacht die Fertigung des Spiegel, wodurch eine kostengünstige Optikeinrichtung bereitgestellt werden kann, was auch insgesamt zu einer sehr günstig herzustellenden erfindungsgemäßen Anordnung führt.

Ferner kann bei der erfindungsgemäßen Anordnung der Spiegel der Optikeinrichtung als eine reflektierende Beschichtung auf einer gekrümmten und dem Lichtmodulator abgewandten Grenzfläche eines transparenten Optikelements der Optikeinrichtung ausgebildet sein. Dies führt zu dem Vorteil, daß die Anzahl der zu justierenden Elemente der Optikeinrichtung verringert ist, so daß eine schnellere Herstellung möglich wird. Des weiteren ist die reflektierende Beschichtung auf der Grenzfläche gebildet und weist somit keine treiliegende Verspiegelungsschicht auf, die leicht verschmutzen könnte, so daß die reflektierenden Eigenschaften und die Abbildungseigenschaften der Optikeinrichtung dauerhaft sichergestellt werden können.

In einer bevorzugten Ausgestaltung der erfindungsgemäßen Anordnung ist die Optikeinrichlung eine katadioptrische Optik (eine Optik, die zumindest einen abbildenden Spiegel und zumindest eine abbildende Linse umfaßt). Mit einer solchen Optik lassen sich besonders gute Abbildungseigenschaften bei geringen Abmessungen mit wenig Optikelementen realisieren, so daß vorteilhaft auch noch eine Gewichtsreduzierung erreicht wird.

Eine besonders bevorzugte Weiterbildung der erfindungsgemäßen Anordnung besteht darin, daß die Lichtquelle mehrfarbiges Licht abgibt, eine Farbeinheit zwischen der Optikeinrichtung und dem Lichtmodulator angeordnet ist und ein zweiter reflektiver Lichtmodulator der Farbeinheit nachgeschaltet ist, wobei die Farbeinheit über die Optikeinrichtung mit Licht des leuchtenden Feldes beaufschlagbar ist und davon Licht einer ersten Farbe auskoppelt und auf den ersten Lichtmodulator lenkt und Licht einer zweiten Farbe auskoppelt und auf den zweiten Lichtmodulator lenkt, wobei die Lichtmodulatoren das auf sie fallende Licht modulieren, um jeweils ein Farbbild zu erzeugen, und wobei das modulierte Licht mittels der Farbeinheit zu einem gemeinsamen Strahlenbündel überlagert wird, mit dem die Optikeinrichtung beaufschlagt wird, so daß ein mehrfarbiges Bild in der Zwischenbildebene erzeugt wird. Bei dieser Anordnung muß vorteilhaft die Schnittweite der Projektionsoptik nicht vergrößert werden, obwohl zwischen der Projektionsoptik und den Lichtmodulatoren die Farbeinheit zwischengeschaltet ist, da die Optikeinrichtung ein Zwischenbild der auf den Lichtmodulatoren eingestellten Teilbilder in der Zwischenbildebene erzeugt.

Insbesondere kann die erfindungsgemäße Anordnung noch einen dritten der Farbeinheit nachgeschalteten reflektiven Lichtmodulator aufweisen, wobei die Farbeinheit Licht einer dritten Farbe aus dem Licht, mit dem sie beaufschlagt wird, auskoppelt und auf den dritten Lichtmodulator lenkt, der das auf ihn fallende Licht moduliert, um ein drittes Farbteilbild zu erzeugen, und wobei das modulierte Licht der Lichtmodulatoren mittels der Farbeinheit zu dem gemeinsamen Strahlenbündel überlagert wird, mit dem die Optikeinrichtung beaufschlagt wird. Da drei Lichtmodulatoren für drei unterschiedliche Farbteilbilder vorgesehen sind, kann ein brillantes Farbbild, das aus den überlagerten Farbteilbildem zusammengesetzt ist, leicht erzeugt werden.

Bevorzugt werden durch die Lichtmodulatoren Farbteilbilder in den Primärfarben Rot, Grün und Blau erzeugt, aus denen das gewünschte mehrfarbige Bild mit hoher Farbbrillanz erzeugt werden kann.

Bei einer vorteilhaften Ausgestaltung der erfindungsgemäßen Anordnung sind die Lichtmodulatoren so ausgelegt, daß sie den Polarisationszustand, insbesondere die Polarisationsrichtung, des auf sie einfallenden, bevorzugt linear polarisierten, Lichts modulieren, wobei die Lichtmodulatoren bevorzugt durch reflektive LCD-Module verwirklicht sind.

Damit können durch die Lichtmodulatoren polarisationsmodulierte Bilder bzw. Farbteilbilder erzeugt werden. In diesem Fall ist noch ein der Zwischenbildebene vorgeschalteter Analysator vorgesehen, der mit dem modulierten Licht des bzw. der Lichtmodulatoren beaufschlagbar ist und bewirkt, daß nur Licht mit einem vorbestimmten Polarisationszustand in die Zwischenbildebene gelangt. Dadurch wird vorteilhaft erreicht, daß nur das Licht der mittels der Lichtmodulatoren hellgeschalteten Bildpunkte in die Zwischenbildebene gelangt und durch die Projektionsoptik auf die Projektionsfläche projiziert wird.

Bevorzugt ist der Analysator zwischen der Zwischenbildebene und der Optikeinrichtung angeordnet, wodurch die erfindungsgemäße Anordnung sehr kompakt aufgebaut werden kann.

In einer weiteren vorteilhaften Ausgestaltung der erfindungsgemäßen Anordnung ist der Analysator durch einen Polarisationsstrahlteiler verwirklicht, auf den das vom leuchtenden Feld kommende Licht fällt und der davon nur linear polarisiertes Licht einer ersten Polarisationsrichtung zur Optikeinrichtung lenkt, so daß der bzw. die Lichtmodulatoren mit linear polarisiertem Licht der ersten Polarisationsrichtung über die Optikeinrichtung beaufschlagt werden. Weiterhin fällt das von dem bzw. den Lichtmodulatoren reflektierte Licht über die Optikeinrichtung wiederum auf den Polarisationsstrahlteiler, der davon nur linear polarisiertes Licht einer zweiten Polarisationsrichtung, die um 90° gegenüber der ersten Polarisationsrichtung gedreht ist, zur Zwischenbildebene hindurch läßt. Durch die Verwendung des Polarisationsstrahlteilers als Polarisator für das Beleuchtungslicht der Lichtmodulatoren und als Analysator für das von den Lichtmodulatoren kommende Projektionslicht, kann die erfindungsgemäße Anordnung sehr kompakt ausgebildet werden (so können sich der Beleuchtungsstrahlengang und der Projektionsstrahlengang in der Optikeinrichtung vollständig überdecken).

Insbesondere kann als Lichtmodulator auch eine Kippspiegelmatrix eingesetzt werden, die eine Vielzahl von in Zeilen und Spalten angeordnete Kippspiegel aufweist, die voneinander unabhängig zumindest zwischen einer ersten und einer zweiten Kippstellung hin und her gekippt werden können. In diesem Fall ist die erfindungsgemäße Anordnung so ausgebildet, daß das von den in der ersten Kippstellung befindlichen Spiegeln reflektierte Licht in die Zwischenbildebene gelangt, während das von den in der zweiten Kippstellung stehenden Spiegeln reflektierte Licht nicht in die Zwischenbildebene gelangt. Durch die Kippspiegel läßt sich vorteilhaft eine erfindungsgemäße Anordnung verwirklichen, bei der das Licht, mit dem die Kippspiegelmatrix beleuchtet wird, nicht speziell polarisiert sein muß, so daß die durch eine Polarisation des Lichts verursachten Verluste vermieden werden können.

Insbesondere kann die erfindungsgemäße Anordnung auch noch dadurch weitergebildet werden, daß die Optikeinrichtung aus einer Plankonvexlinse und einer verspiegelten Meniskuslinse besteht, wobei die der Plankonvexlinse abgewandte Grenzfläche der Meniskuslinse verspiegelt ist. Die Linsendurchmesser sind so groß gewählt, daß jede Linse bei einer Abbildung zweimal durchlaufen wird. Diese Optikeinrichtung weist in diesem Fall nur zwei Optikelemente auf, wodurch die Herstellungskosten und der Aufwand zur Justierung sehr gering sind. Dadurch wird insgesamt eine kostengünstig herzustellende erfindungsgemäße Anordnung bereitgestellt.

Es ist natürlich auch möglich, die eine Plankonvexlinse durch zwei Plankonvexlinsen mit kleinerem Durchmesser zu ersetzen, die dann bei einer Abbildung jeweils nur einmal durchlaufen werden. In diesem Fall umfaßt die Optikeinrichtung zwar 3 Elemente, aber die Herstellung der zwei Plankonvexlinsen ist aufgrund ihres deutlich geringeren Durchmessers einfacher möglich als die Herstellung der Plankonvexlinse mit dem großen Durchmesser.

In einer anderen vorteilhaften Ausgestaltung der erfindungsgemäßen Anordnung weist die Optikeinrichtung sowohl einen Konkavspiegel als auch einen Konvexspiegel auf. Dadurch kann eine nur durch abbildende Spiegel verwirklichte Optikeinrichtung bereitgestellt werden, so daß keine aus teuren Materialien in aufwendiger Art und Weise herzustellende Linsen benötigt werden. Auch somit läßt sich die erfindungsgemäße Anordnung kostengünstig verwirklichen.

Ferner kann die erfindungsgemäße Anordnung auch noch eine Steuereinheit aufweisen, die den bzw. die Lichtmodulatoren auf der Basis vorgegebener Bilddaten ansteuert, um das gewünschte Bild bzw. die gewünschten Farbteilbilder mit dem bzw. den Lichtmodulatoren zu erzeugen.

Die Erfindung wird nachfolgend beispielshalber anhand der Zeichnungen noch näher erläutert.

Es zeigen:
- Fig. 1: eine schematische Schnittdarstellung der erfindungsgemäßen Anordnung gemäß einer ersten Ausführungsform;
- Fig. 2: eine schematische Schnittdarstellung einer zweiten Ausführungsform der erfindungsgemäßen Anordnung, bei der die Optikeinrichtung einen konkaven und einen konvexen Spiegel aufweist;
- Fig. 3: eine schematische Ansicht einer Weiterbildung der in Fig. 2 gezeigten Anordnung;
- Fig. 4: eine schematische Ansicht einer weiteren Ausführungsform der erfindungsgemäßen Anordnung;
- Fig. 5: eine schematische Ansicht einer anderen Ausführungsform der erfindungsgemäßen Anordnung;
- Fig. 6: eine schematische Ansicht einer noch anderen Ausführungsform der erfindungsgemäßen Anordnung;
- Fig. 7: eine Weiterbildung der in Fig. 6 gezeigten Ausführungsform;
- Fig. 8: eine Weiterbildung der in Fig. 4 gezeigten Ausführungsform;
- Fig. 9: eine perspektivische Ansicht einer weiteren Ausführungsform der erfindungsgemäßen Anordnung, und
- Fig. 10: eine Schnittdarstellung der Projektionsoptik der erfindungsgemäßen Anordnung.

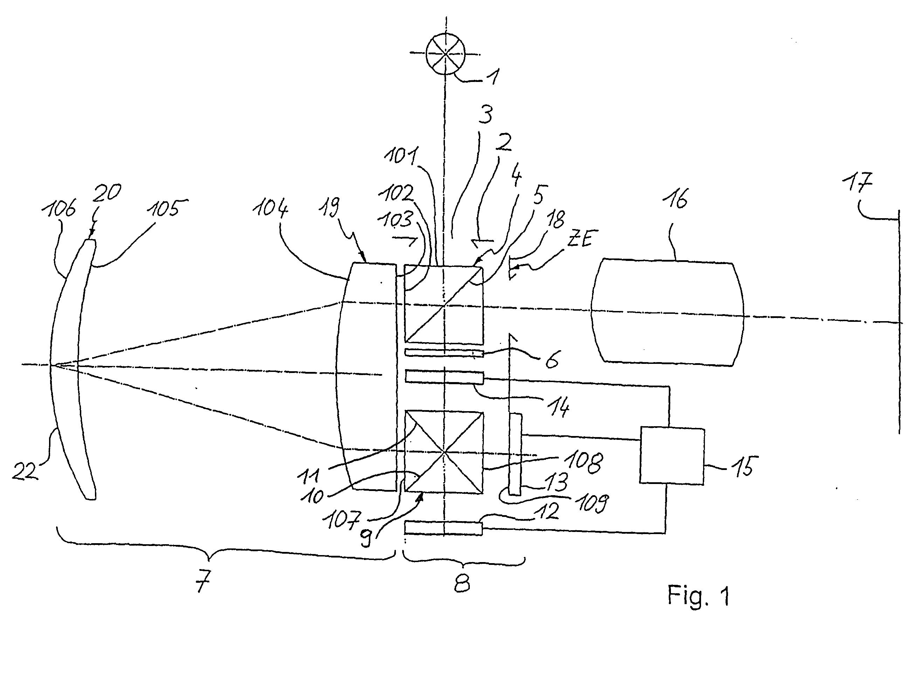

Wie aus Fig. 1 ersichtlich ist, umfaßt die erfindungsgemäße Anordnung zum Projizieren eines Bildes auf eine Projektionsfläche in einer ersten Ausführungsform eine Lichtquelle 1 (z.B. Halogen- oder Bogenlampe), mit dessen weißem Licht eine Blende 2 beaufschlagt wird, so daß in der Öffnung der Blende 2 ein leuchtendes Feld 3 erzeugt wird, dessen Form durch die Form der Blendenöffnung vorgegeben ist. In dem hier gezeigten Beispiel weist das leuchtende Feld 3 eine rechteckige Form auf. Das Licht des leuchtenden Feldes 3 trifft auf einen Polarisationsteilenwürfel 4, der eine Polarisationsteilerschicht 5 enthält.

Die Polarisationsteilerschicht 5 des Polarisationsteilerwürfels 4 reflektiert das von dem leuchtenden Feld 3 kommende Licht, das in einer ersten Richtung linear polarisiert ist (z.B. senkrecht zur Zeichenebene polarisiert, s-Polarisation), so daß linear polarisiertes Licht, dessen Polarisationsrichtung senkrecht zur Zeichenebene ist, in Fig. 1 gesehen nach links abgelenkt wird. Hingegen geht das in einer zweiten Richtung polarisierte Licht (parallel zur Zeichenebene, p-Polarisation) durch die Polarisationsteilerschicht 5 hindurch und trifft auf eine dahinter angeordnete Strahlfalle 6.

Das an der Polarisationsteilerschicht 5 reflektierte Licht (s-Polarisation) wird über eine dem Polarisationsteiler 4 nachgeschaltete Optikeinrichtung 7 auf eine Farbbilderzeugungseinheit 8 abgebildet.

Die Farbbilderzeugungseinheit 8 umfaßt einen Farbteilerwürfel 9 mit einer ersten und einer Zweiten Farbteilerschicht 10, 11, die sich unter einem Winkel von 90° kreuzen und das von der Optikeinrichtung 7 kommende weiße Licht in seinen roten, grünen und blauen Farbanteil aufteilen, wobei die Fafianteile in voneinander verschiedene Farbkanäle gelenkt werden. Ferner enthält die Farbbilderzeugungseinheit 8 drei reflektive Lichtmodulatoren (LCD-Module) 12, 13 und 14, von denen jeweils einer in einem der Farbkanäle angeordnet ist und mit Licht der entsprechenden Farbe beaufschlagbar ist. Die Lichtmodulatoren 12, 13 und 14 werden mittels einer Ansteuereinheit 15 auf der Basis vorgegebener Bilddaten so gesteuert, daß das von den Lichtmodulatoren 12 bis 14 reflektierte Licht entsprechend den zu erzeugenden Farbteilbildern des zu projizierenden Bildes moduliert ist. Somit geht von den Lichtmodulatoren 12 bis 14 polarisationsmoduliertes Licht aus, und es wird in diesem Sinne auf den Lichtmodulatoren 12 bis 14 jeweils ein Farbteilbild erzeugt.

Das von den Lichtmodulatoren 12, 13 und 14 modulierte Licht und somit die Farbteilbilder werden von den Lichtmodulatoren 12, 13 und 14 zurück zum Farbteilerwürfel 9 reflektiert und von diesem überlagert und dann mittels der Optikeinrichtung 7 in eine dem Polarisationsteilerwürfel 4 nachgeschaltete Zwischenbildebene ZE abgebildet (wie nachfolgend noch im Detail beschrieben wird) und dann mittels einer der Zwischenbildebene ZE nachgeordneten Projektionsoptik 16 auf eine Projektionsfläche 17 projiziert. In der Zwischenbildebene ZE ist eine Blende 18 angeordnet, in deren Blendenöffnung das Zwischenbild liegt und die eine seitliche Begrenzung für das Zwischenbild darstellt.

Die Optikeinrichtung 7 ist so ausgebildet, daß das leuchtende Feld 3 konjugiert ist mit den Lichtmodulatoren 12, 13 und 14 bzw. deren bildgebenden Bereichen. Ferner sind die bildgebenden Bereiche der Lichtmodulatoren 12, 13 und 14 auch mit der Zwischenbildebene ZE konjugiert, wobei die Optikeinrichtung 7 hier ein symmetrisches 1:1-Abbildungssystem ist. Daher ist die Blende 2 so gewählt, daß ihre Öffnung und somit das leuchtende Feld 3 die gleiche Größe und Form wie jeder der gleich ausgebildeten bildgebenden Bereiche der Lichtmodulatoren 12, 13 und 14 aufweist.

Bei der in Fig. 1 gezeigten Ausführungsform umfaßt die Optikeinrichtung 7 eine Plankonvexlinse 19, deren plane Seite dem Polarisationsteilerwürfel 4 und dem Farbteilerwürfel 9 zugewandt ist, und eine Meniskuslinse 20, die auf ihre der Plankonvexlinse 19 abgewandten Seite 21 eine Verspiegelungsschicht 22 aufweist, wodurch der Strahlengang in der Optikeinrichtung 7 gefaltet ist.

Der Aufbau der Optikeinrichtung kann der folgenden Tabelle 1 in Verbindung mit Fig. 1 entnommen werden:

**Tabelle 1**

| Flächennummer | Krümmungsradius (mm) | zwischen den Flächen | Abstand (mm) | Brechungsindex | Abbesche Zahl |
|---|---|---|---|---|---|
| 2 | ∞ | 2-101 | 2,00 | | |
| 101 | ∞ | 102-103 | 0,01 | | |
| 102 | ∞ | 103-104 | 27,72 | 1,5168 | 64,17 |
| 103 | ∞ | 104-105 | 271,80 | | |
| 104 | 130,088 | 105-106 | 10,40 | 1,6014 | 38,32 |
| 105 | 374,16 | 103-107 | 0,01 | | |
| 106 | 375,38 | 107-108 | 65,00 | | |
| 107 | ∞ | 108-109 | 2,00 | | |
| 108 | ∞ | | | | |
| 109 | ∞ | | | | |

Der Brechungsindex und die Abbesche Zahl ist hier für die Wellenlänge 587,6 mm angegeben, und der Polarisationsteilerwürfel 4 weist eine Kantenlänge von 65,00 mm auf, so daß die Zwischenbildebene ZE von der der Projektionsoptik 16 zugewandten Seite 2,00 mm beabstandet ist. Auch der Abstand der Lichtmodulatoren 12 und 14 von den entsprechenden Seiten des Farbteilerwürfels 9 beträgt 2,00 mm.

Die in Fig. 1 gezeigte Optikeinrichtung 7 ist eine katadioptrische Optik (sie enthält abbildende Spiegel und Linsen), die einerseits eine 1:1-Abbildung des leuchtenden Feldes 3 auf die LCD-Module 12 bis 14 und andererseits eine 1:1-Abbildung der LCD-Module 12 bis 14 in die Zwischenbildebene ZE durchführt. Der Durchmesser der Plankonvexlinse 19 ist mindestens so groß gewählt wie die Summe der Kantenlänge des Polarisationsteilerwürfels 4 und der Kantenlänge des Farbteilerwürfels 7, so daß die Plankonvexlinse 19 bei den angegebenen Abbildungen jeweils zweimal durchlaufen wird. Natürlich kann die Plankonvexlinse 19 durch zwei Plankonvexlinsen (nicht gezeigt) mit kleineren Durchmessern ersetzt werden.

Auf den LCD-Modulen 12 bis 14 werden ein rotes, ein grünes und ein blaues Farbteilbild wie folgt eingestellt. Das vom leuchtenden Feld 2 ausgehende Licht (bevorzugt weißes Licht) trifft auf die Polarisationsteilerschicht 5 des Polarisationsteilerwürfels 4, die das senkrecht zur Zeichenebene linear polarisierte Licht zur Optikeinrichtung 7 lenkt, die dann dieses Licht zur Farbbilderzeugungseinheit 8 weiterleitet. In dem Farbteilerwürfel 9 wird dieses Licht in seinen roten, grünen und blauen Farbanteil dadurch aufgeteilt, daß die erste Farbteilerschicht 10 blaues Licht reflektiert und auf das LCD-Modul 14 lenkt. Die restlichen Farbanteile gehen durch die erste Farbteilerschicht 10 hindurch. Die zweite Farbteilerschicht 11 reflektiert rotes Licht, so daß dieses auf das LCD-Modul 12 gerichtet wird, und läßt die restlichen Farbanteile durch, so daß grünes Licht auf das LCD-Modul 13 gelangt.

Die LCD-Module 12 bis 14 sind jeweils gleich aufgebaut und weisen einen rechteckigen bildgebenden Bereich von z.B. 18,5 mm x 13,9 mm oder 26,4 mm x 19,8 mm mit einer Mehrzahl von in Zeilen und Spalten angeordneten Bildpixeln auf, die voneinander unabhängig mittels der Ansteuereinheit 15 angesteuert werden können, wobei zumindest zwei unterschiedliche Zustände für jedes Bildpixel einstellbar sind. In einem ersten Zustand wird das auf das entsprechende Bildpixel einfallende Licht reflektiert, ohne daß seine Polarisationsrichtung verändert wird, während im zweiten Zustand die Polarisationsrichtung des reflektierten Lichts gegenüber der Polarisation des einfallenden Lichts um 90° gedreht wird.

Um ein Bildpixel als hellen Bildpunkt zu schalten, wird daher der zweite Zustand eingestellt, bei dem die Polarisation um 90° gedreht wird, so daß dieses reflektierte Licht eine p-Polarisation aufweist. Wenn das Bildpixel als dunkler Bildpunkt geschaltet werden soll, wird es in den ersten Zustand gesetzt, in dem es das Licht zwar reflektiert, aber nicht seine Polarisation ändert. Dadurch wird auf den LCD-Modulen (bzw. den bildgebenden Bereichen) jeweils ein polarisationsmoduliertes Farbteilbild eingestellt. Diese polarisationsmodulierten Farbteilbilder werden durch den Farbteilerwürfel 9 dann mittels der Optikeinrichtung 7 in die Zwischenbildebene ZE abgebildet, wobei das Licht dabei noch durch den Polarisationsteilerwürfel 4 hindurchläuft, der jetzt als Analysator wirkt und nur Licht mit einer p-Polarisation hindurchläßt und das s-polarisierte Licht zur Lichtquelle 1 hin wegreflektiert, so daß in die Zwischenbildebene ZE nur das Licht der hell geschalteten Bildpixel abgebildet wird.

Das so in die Zwischenbildebene ZE abgebildete Zwischenbild wird dann mittels der Projektionsoptik 16 auf die Projektionsfläche 17 projiziert.

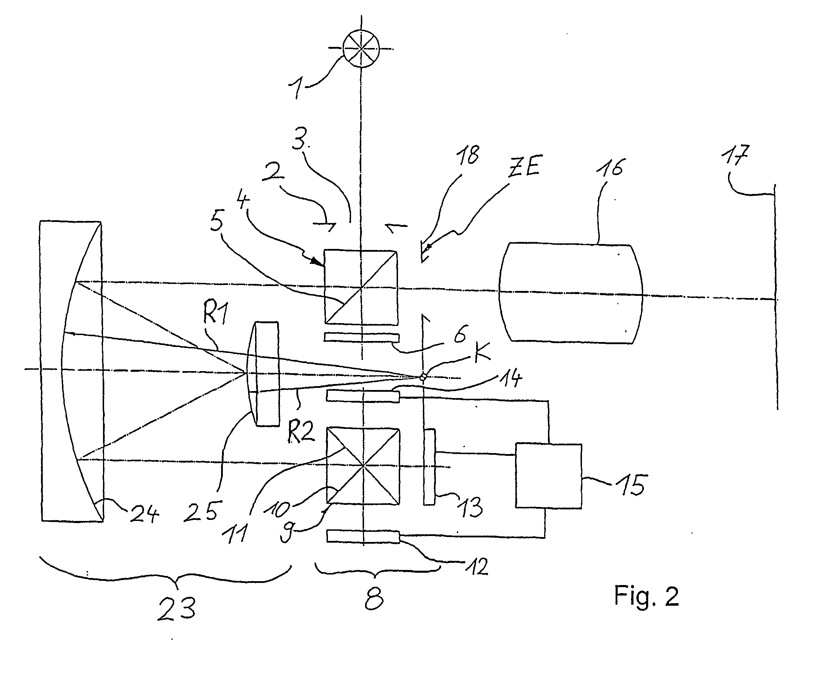

In Fig. 2 ist eine weitere Ausführungsform der erfindungsgemäßen Anordnung zum Projizieren des Bildes auf einer Projektionsfläche gezeigt, wobei sich diese Anordnung von der in Fig. 1 gezeigten dadurch unterscheidet, daß statt der Optikeinrichtung 7 eine Optikeinrichtung 23 vorgesehen ist. Die restlichen Elemente entsprechen denen von Fig. 1 und sind mit den gleichen Bezugszeichen bezeichnet. Zur Beschreibung dieser Elemente wird auf die entsprechende Beschreibung zu Fig. 1 verwiesen.

Die Optikeinrichtung 23 umfaßt einen ersten und einen zweiten sphärischen Spiegel 24 und 25, die so angeordnet sind, daß sie eine gemeinsame optische Achse aufweisen und daß ihre Krümmungsmittelpunkte in einem Punkt K zusammenfallen, der in der Zwischenbildebene ZE liegt, wobei der erste Spiegel 24 konkav und der zweite Spiegel 25 konvex ist. Die Spiegel 24 und 25 sind so angeordnet, daß das vom Polarisationsteilerwürfel 4 kommende Licht auf den ersten Spiegel 24 trifft, von diesem zum zweiten Spiegel 25 reflektiert wird, der wiederum das Licht zum ersten Spiegel 24 zurückreflektiert, von dem es dann zur Farbbilderzeugungseinheit 8 gelenkt wird (der Strahlverlauf in der Optikeinrichtung 23 ist somit W-förmig).

Die Krümmungsradien R1 und R2 der beiden Spiegel 24 und 25 sind so gewählt, daß der Krümmungsradius R1 des ersten Spiegels 24 doppelt so groß ist wie der Krümmungsradms R2 des zweiten Spiegels 25. Die Optikeinrichtung 23 umfaßt somit nur zwei Spiegel 24 und 25. wodurch ein aus nur zwei Komponenten aufgebautes 1:1-Abbildungssystem mit einem mehrfach gefalteten Strahlengang bereitgestellt wird, mit dem eine sehr kompakte und dennoch lichtstarke Projektionsanordnung verwirklicht werden kann.

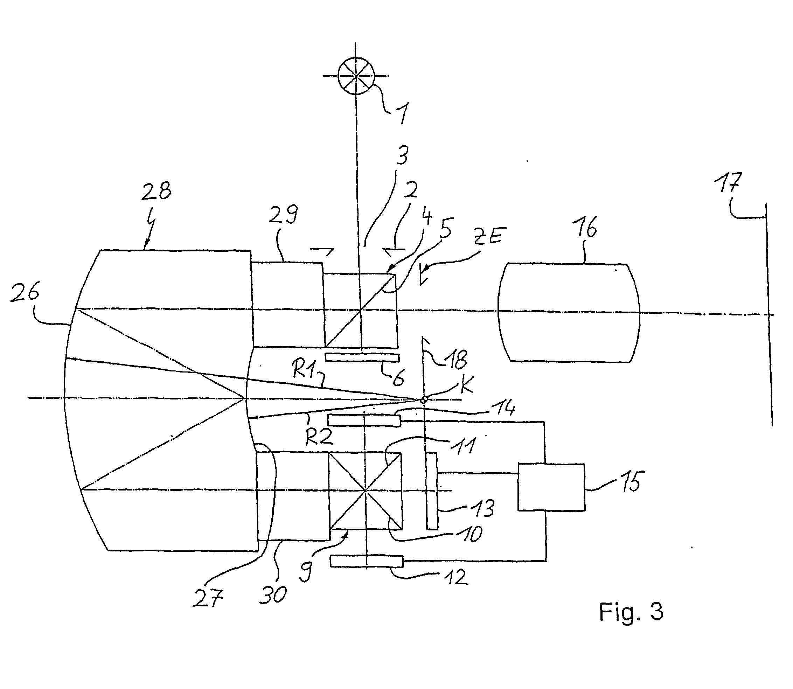

In Fig. 3 ist eine Weiterbildung der in Fig. 2 gezeigten Projektionsanordnung dargestellt, bei der die beiden Spiegel durch entsprechend gekrümmte und verspiegelte Grenzflächen 26, 27 eines Glasblocks 28 verwirklicht sind. Ferner sind noch im Unterschied zu der in Fig. 2 gezeigten Ausführungsform ein erster Glasadapter 29, der den Polarisationsteilerwürfel 4 mit dem Glasblock 28 optisch koppelt, und ein zweiter Glasadapter 30, der den Farbteilerwürfel 9 mit dem Glasblock 28 optisch koppelt, vorgesehen. Bevorzugt sind die Glasadapter 29 und 30 mit dem Glasblock 28, dem Polarisationsteilerwürfel 4 und dem Farbteilerwürfel 9 verkittet, sie können jedoch auch angesprengt sein.

Ein weiterer Vorteil der Verwendung des Glasblocks 28 und auch der Glasadapter 29, 30, falls sie vorgesehen sind, besteht darin, daß der Öffnungswinkel des Strahlbüschels in den Glaskörpern geringer als in Luft ist, so daß das gesamte System kompakter ausgebildet werden kann.

Vorteilhaft ist bei dieser Ausführungsform, daß im Vergleich zu einer Anordnung ohne Glasadapter 29 und 30 die Anzahl der Glas-Luft-Grenzflächen, die verschmutzungsanfällig sind, reduziert ist. Des weiteren sind die Spiegel durch die verspiegelten Grenzflächen 26 und 27 gebildet, wodurch diese Spiegelflächen keine Grenzfläche zur Luft aufweisen und somit auch nicht verschmutzen können. Natürlich kann die in Fig. 3 gezeigte Ausführungsform auch ohne die Glasadapter 29 und 30 verwirklicht werden.

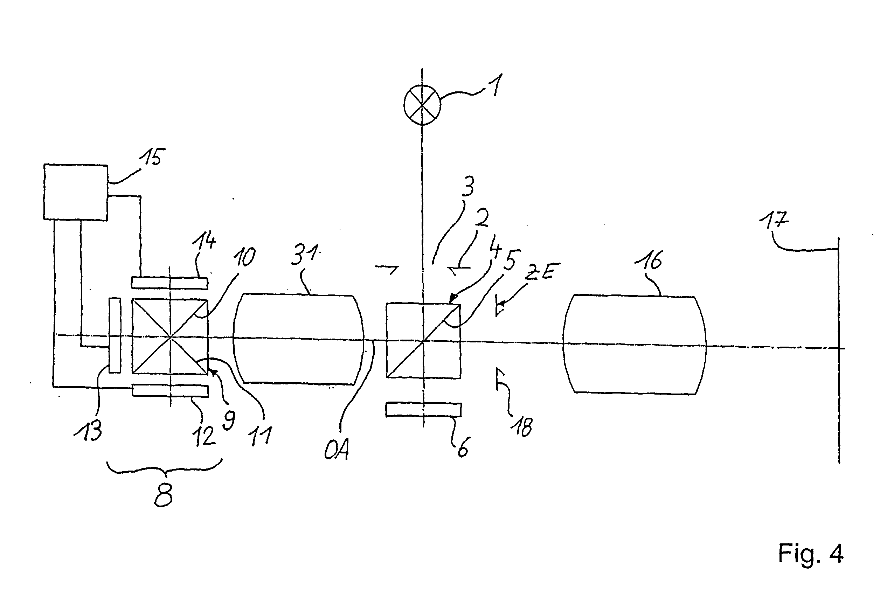

In Fig. 4 ist eine weitere Ausführungsform der erfindungsgemäßen Projektionsanordnung gezeigt, die sich von der in Fig. 1 gezeigten Ausführungsform zunächst darin unterscheidet, daß die Farbeinheit 8 eine gemeinsame optische Achse OA mit dem Polarisationsteilerwürfel 4 und der Projektionsoptik 16 aufweist. Ferner ist zwischen der Farbeinheit 8 und dem Polarisationsteilerwürfel 4 eine Optikeinrichtung 31 angeordnet, deren optische Achse mit der optischen Achse OA zusammenfällt und die kein Spiegelelement sondern nur Linsen umfaßt, so daß der Strahlengang in der Optikeinrichtung 31 nicht gefaltet ist. Die restlichen Elemente sind gleich zu den in Fig. 1 gezeigten Elementen und sind mit den gleichen Bezugszeichen bezeichnet. Zu ihrer Beschreibung wird auf die entsprechende Beschreibung zu Fig. 1 verwiesen.

Auch bei der in Fig. 4 gezeigten Ausführungsform führt die Optikeinrichtung 31 eine 1:1-Abbildung des leuchtenden Feldes 3 auf die bildgebenden Bereiche der Lichtmodulatoren 12 bis 14 und eine 1:1-Abbildung der auf den Lichtmodulatoren 12 bis 14 eingestellten Farbteilbilder in die Zwischenbildebene ZE durch. Die genaue Ausbildung der Optikeinrichtung 31 kann der Fachmann ohne weiteres aufgrund eines Fachwissens festlegen, wenn ihm vorgegeben wird, daß die Optikeinrichtung die angegebenen 1:1-Abbildungen durchführen soll.

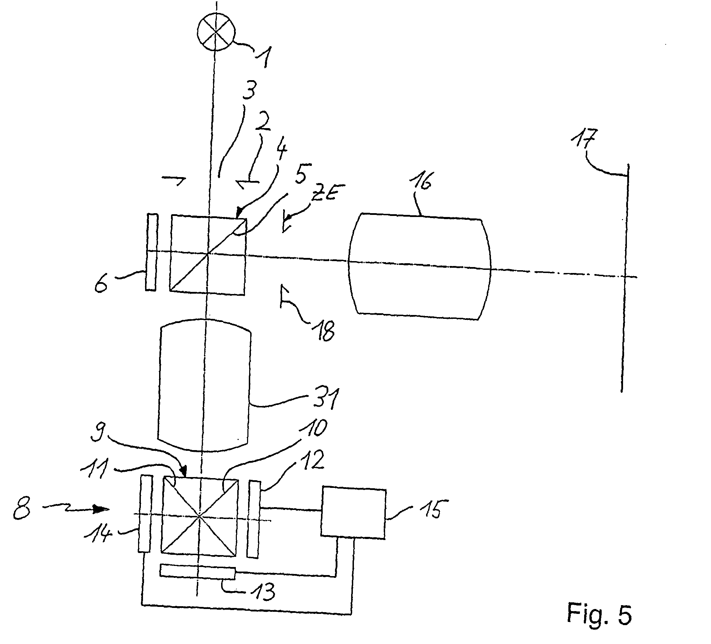

Eine weitere Ausführungsform der erfindungsgemäßen Projektionsanordnung ist in Fig. 5 gezeigt. Diese Ausführungsform unterscheidet sich von der in Fig. 4 gezeigten Ausführungsform dadurch, daß das durch die Polarisationsteilerschicht 5 hindurchgehende und somit parallel zur Zeichenebene linear polarisierte Licht (p-Polarisation) der Lichtquelle 1 zur Ausleuchtung der bildgebenden Bereiche der LCD-Module 12 bis 14 verwendet wird. Der dem Polarisationsteilerwürfel 4 nachgeschaltete Teil der Projektionsanordnung (nämlich die Optikeinrichtung 31 und die Farbbilderzeugungseinheit 8) ist identisch zu dem entsprechenden Teil bei der in Fig. 4 gezeigten Projektionsanordnung, so daß die Teile mit den gleichen Bezugszeichen bezeichnet sind und zu deren Beschreibung auf die entsprechende Beschreibung zu Fig. 4 verwiesen wird.

Bei der in Fig. 5 gezeigten Ausführungsform wird linear polarisiertes Licht mit der p-Polarisation zur Beleuchtung der LCD-Module 12 bis 14 eingesetzt, so daß die hellgeschalteten Bildpunkte mit linear polarisiertem Licht der s-Polarisation verwirklicht werden, da dieses Licht an der Polarisationsteilerschicht 5 des Polarisationsteilerwürfels 4 in Fig. 5 gesehen nach rechts reflektiert wird.

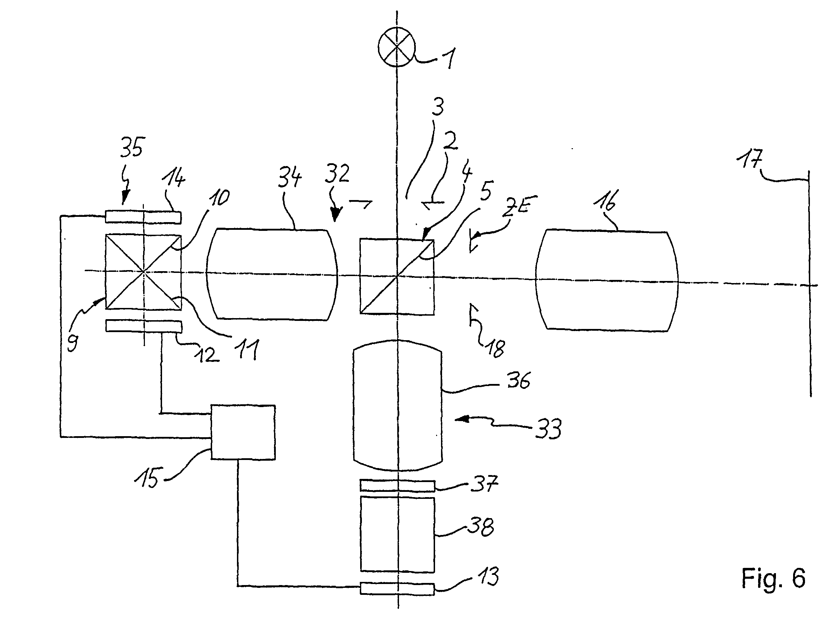

In Fig. 6 ist eine weitere Ausführungsform der erfindungsgemäßen Projektionsanordnung gezeigt, die im wesentlichen eine Kombination der in Fig. 4 und 5 gezeigten Ausführungsform darstellt, wobei das durch die Polarisationsteilerschicht 5 des Polarisationsteilerwürfels 4 aufgeteilte Licht sich in einem ersten Arm 32 und einem dazu senkrecht verlaufenden zweiten Arm 33 ausbreitet. Im ersten Arm 32 ist eine dem Polarisationsteilerwürfel 4 nachgeschaltete 1:1-Abbildungsoptik 34 angeordnet, der wiederum eine Farbteilbilderceugungseinheit 35 nachgeordnet ist. Die Farbbilderzeugungseinheit 35 umfaßt den Farbteilerwürfel 9 mit der ersten und zweiten Farbteilerschicht 10, 11 und den zwei LCD-Modulen 12, 14. Die Farbteilbilderzeugungseinheit 35 unterscheidet sich somit von der in Fig. 4 gezeigten Farbbilderzeugungseinheit 8 nur dadurch, daß das zweite LCD-Modul 13 weggelassen ist.

Im zweiten Arm 33 ist dem Polarisationsteilerwürfel 4 wiederum eine 1:1-Abbildungsoptik 36 nachgeordnet, der ein Grünfilter 37, ein Glasblock 38 und ein LCD-Modul 13 in dieser Reihenfolge nachgeschaltet ist.

Der Grünfilter 37 läßt nur grünes Licht passieren, so daß mit dem LCD-Modul 13 das grüne Farbteilbild einstellbar ist. Die Länge des Glasblocks 38 ist so gewählt, daß der Glasweg für das grüne Farbteilbild gleich dem Glasweg des roten und blauen Farbteilbildes im ersten Arm 32 ist.

Bei der in Fig. 6 gezeigten Anordnung wird somit mit dem linear polarisierten Licht der s-Polarisation im ersten Arm 32 das rote und blaue Farbteilbild eingestellt und mit dem linear polarisierten Licht der p-Polarisation im zweiten Arm 33 das grüne Farbteilbild eingestellt. Die eingestellten Farbteilbilder werden wiederum mit den 1:1-Abbildungsoptiken 34, 36 in die Zwischenbildebene ZE abgebildet und dort überlagert, so daß ein mehrfarbiges Zwischenbild erzeugt wird, das mittels der Projektionsoptik 16 auf die Projektionsfläche 17 projiziert werden kann. Durch den in Fig. 6 gezeigten Aufbau kann die Farbbrillanz des mehrfarbigen Bildes verbessert werden, da aufgrund des Grünfilters 37 das LCD-Modul 13 eindeutig mit grünem Licht beaufschlagt wird und nicht mit dem Licht, das sowohl durch die erste als auch durch die zweite Farbteilerschicht 10, 11 hindurchgelassen wird und somit einen gewissen roten und/oder blauen Farbanteil enthalten kann.

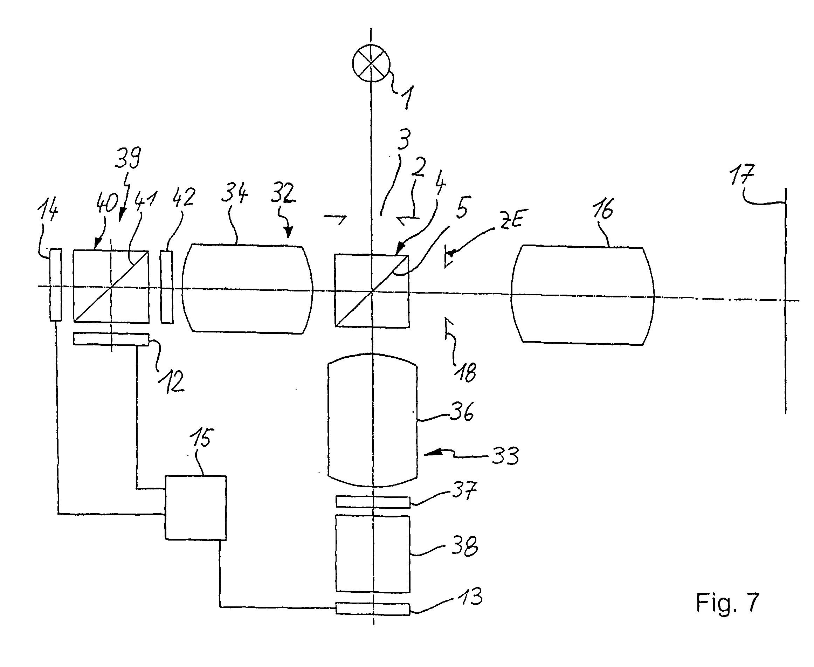

In Fig. 7 ist eine weitere Ausführungsform der erfindungsgemäßen Anordnung zum Projizieren eines Bildes gezeigt, die sich von der in Fig. 6 gezeigten dadurch unterscheidet, daß anstatt der Farbteilbilderzeugungseinheit 35 eine Farbteilbilderzeugungseinheit 39 vorgesehen ist (die restlichen Elemente sind gleich zu der in Fig. 6 gezeigten Ausführungsform und werden deshalb nicht noch einmal beschrieben). Die Farbteilbilderzeugungseinheit 39 umfaßt einen der 1:1-Abbildungsoptik 34 nachgeordneten Farbteilerwürfel 40 mit einer Farbteilerschicht 41, die gegenüber der optischen Achse der 1:1-Abbildungsoptik 34 um 45° geneigt ist, und ein erstes und zweites LCD-Modul 12, 14, die so angeordnet sind, daß das durch die Farbteilerschicht 40 reflektierte Licht auf das erste LCD-Modul 12 und das durch die Farbteilerschicht 40 hindurchtretende Licht auf das zweite LCD-Modul 14 trifft. Ferner umfaßt die Färbteilbilderzeugungseinheit 39 noch einen Sperrfilter 42, der zwischen dem Farbteilerwürfel 40 und der 1:1-Abbildungsoptik 34 angeordnet ist und der von dem auf ihn treffenden Licht den grünen Farbanteil herausfiltert und nicht hindurch läßt. Die Farbteilerschicht 41 des Farbteilerwürfels 40 reflektiert den blauen Lichtanteil und läßt den restlichen Lichtanteil (hier also Rot) hindurch, so daß auf den LCD-Modulen 12 und 14 ein blaues und ein rotes Farbteilbild einstellbar ist. Bei dieser Ausführungsform ist der Aufbau des Farbteilerwürfels 40 vereinfacht, da er nur noch eine Farbteilerschicht 41 und nicht mehr sich kreuzende Farbteilerschichten enthält.

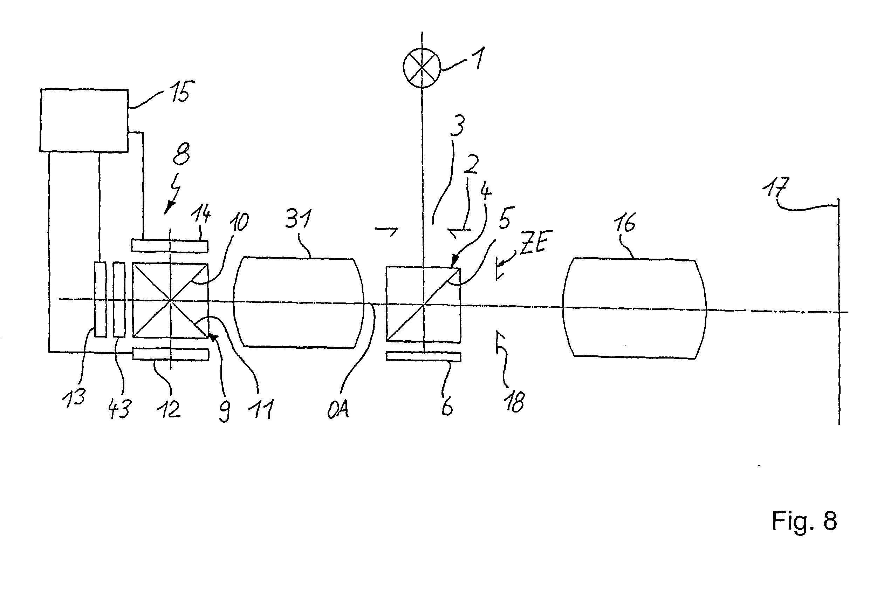

In Fig. 8 ist eine Weiterbildung der in Fig. 4 gezeigten Ausführungsform dargestellt, wobei der Unterschied darin besteht, daß zwischen dem Farbteilerwürfel 9 und dem zweiten LCD-Modul 13 zusätzlich ein Farbfilter 43 angeordnet ist, der nur grünes Licht hindurch läßt. Dadurch wird vorteilhaft erreicht, daß der eventuell noch vorhandene rote und/oder blaue Farbanteil des durch die Farbteilerschichten 10, 11 hindurch getretenen Lichtes herausgefiltert werden, so daß sichergestellt werden kann, daß das LCD-Modul 13 nur mit grünem Licht beaufschlagt wird. Damit wird die Farbbrillanz des projizierten mehrfarbigen Bildes erhöht.

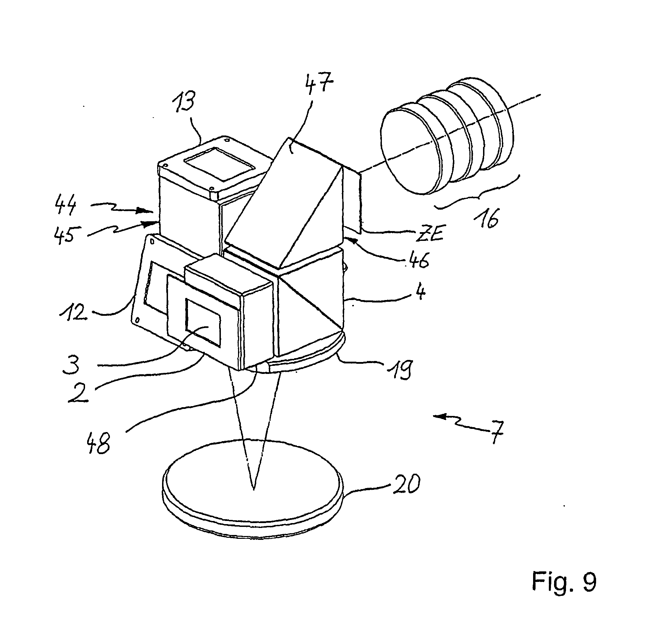

Eine weitere Ausführungsform der erfindungsgemäßen Anordnung ist in der perspektivischen Darstellung von Fig. 9 gezeigt, wobei der Aufbau der Optikeinrichtung 7 und seine Anordnung relativ zum Polarisationsteilerwürfel 4 identisch zu der in Fig. 1 gezeigten Ausführungsform ist. Im Unterschied zu der in Fig. 1 gezeigten Ausführungsform ist jedoch statt der Farbbilderzeugungseinheit 8 eine Farbbilderzeugungseinheit 44 mit einer Prismenanordnung 45 vorgesehen. Die Prismenanordnung entspricht dabei grundsätzlich dem Aufbau der in Fig. 2 der EP 0 734 183 A2 gezeigten Prismenanordnung. Ferner ist bei der in Fig. 9 gezeigten Ausführungsform noch ein Umlenkprisma 46 zwischen dem Polarisationsteilerwürfel 4 und der Zwischenbildebene ZE angeordnet, wobei das Umlenkprisma 46 dazu dient, die Ausbreitungsrichtung des Lichts um 90° umzulenken. Dazu kann die entsprechende Fläche 47 des Umlenkprismas 46 verspiegelt sein, bevorzugt wird aber totale innere Reflexion (Totalreflexion) ausgenutzt (in diesem Fall ist die Fläche 47 nicht verspiegelt). Schließlich ist noch zwischen der Blende 2 und dem Polarisationsteilerwürfel 4 ein Glasblock 48 angeordnet, dessen so gewählt sind, daß die Glaswege vom leuchtenden Feld 3 bis zu den LCD-Modulen 12 bis 14 gleich zum Glasweg von den LCD-Modulen 12 bis 14 bis zur Zwischenbildebene ZE ist. Die in Fig. 9 gezeigte Ausführungsform weist den besonderen Vorteil auf, daß sie aufgrund der Umlenkung mittels des Umlenkprismas 46 sehr kompakt ausgebildet werden kann. Statt dem Umlenkprisma 46 kann natürlich jedes andere optische Element, mit dem der Strahlengang um 90° umgelenkt werden kann, verwendet werden.

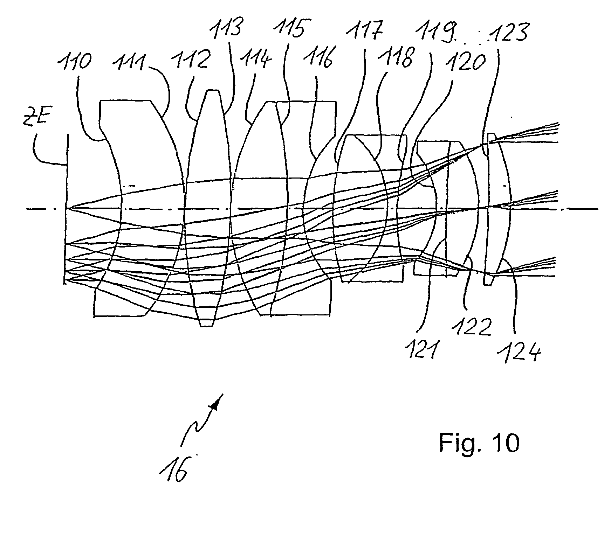

In Fig. 10 ist eine möglich Ausführung der Projektionsoptik 16 gezeigt, die bei jeder der vorher beschriebenen Ausführungsformen eingesetzt werden kann. Der genaue Aufbau der Projektionsoptik 16 kann der nachfolgenden Tabelle entnommen werden, wobei der Brechungsindex und die Abbesche Zahl jeweils für die Wellenlänge 587,6 nm angegeben sind.

**Tabelle 2**

| Flächennummer | Krümmungsradius (mm) | zwischen den Flächen | Abstand (mm) | Brechungsindex | Abbesche Zahl |
|---|---|---|---|---|---|
| 110 | 34,478 | ZE-110 | 12,18 | | |
| 111 | 39,999 | 110-111 | 14,00 | 1,803181 | 46,3799 |
| 112 | -90,065 | 111-112 | 0,10 | | |
| 113 | 103,131 | 112-113 | 10,00 | 1,803181 | 46,3799 |
| 114 | -42,048 | 113-114 | 0,10 | | |
| 115 | 83,089 | 114-115 | 13,00 | 1,617999 | 63,3335 |
| 116 | -22,786 | 115-116 | 3,60 | 1,558361 | 54,1572 |
| 117 | -53,434 | 116-117 | 6,80 | | |
| 118 | 21,066 | 117-118 | 12,00 | 1,617999 | 63,3335 |
| 119 | -50,036 | 118-119 | 2,20 | 1,620040 | 36,3665 |
| 120 | 18,361 | 119-120 | 8,85 | | |
| 121 | -342,75 | 120-121 | 2,20 | 1,717359 | 29,5128 |
| 122 | 27,12 | 121-122 | 7,00 | 1,617999 | 63,3335 |
| 123 | 202,45 | 122-123 | 2,20 | | |
| 124 | 37,417 | 123-124 | 5,00 | 1,850254 | 32,1699 |

## Patentansprüche

1. Anordnung zum Projizieren eines Bildes auf eine Projektionsfläche, mit einer Lichtquelle (1), die Licht abgibt, mit dem ein leuchtendes Feld (3) erzeugbar ist, einem reflektiven Lichtmodulator (12; 13; 14), der mit vom leuchtenden Feld (3) ausgehenden Licht beaufschlagbar ist und dieses zum Erzeugen eines Bildes moduliert, und weiter mit einer dem Lichtmodulator (12; 13; 14) nachgeschalteten Projektionsoptik (16), die mit dem modulierten Licht beaufschlagbar ist, um das Bild auf die Projektionsfläche (17) zu projizieren, **dadurch gekennzeichnet, daß** dem Lichtmodulator (12; 13; 14) eine Optikeinrichtung (7; 23; 31; 33; 34) vorgeschaltet ist, die einerseits vom leuchtenden Feld (3) kommendes Licht auf den Lichtmodulator (12; 13; 14) abbildet und andererseits mittels dem Lichtmodulator (12; 13; 14) moduliertes Licht in eine der Projektionsoptik (16) vorgeschaltete Zwischenbildebene (ZE) abbildet, um in der Zwischenbildebene (ZE) ein Zwischenbild zu erzeugen, das von der Projektionsoptik (16) auf die Projektionsfläche projiziert werden kann.

2. Anordnung nach Anspruch 1, **dadurch gekennzeichnet, daß** die Optikeinrichtung (7; 23; 31; 33; 34) eine 1:1-Abbildungsoptik ist.

3. Anordnung nach Anspruch 1 oder 2, **dadurch gekennzeichnet, daß** die Optikeinrichtung (7; 23; 31; 33; 34) symmetrisch ausgebildet ist.

4. Anordnung nach einem der Ansprüche 1 bis 3, **dadurch gekennzeichnet, daß** die Optikeinrichtung (7; 23; 31; 33; 34) einen gekrümmten Spiegel (22; 24), der bevorzugt sphärisch gekrümmt ist, umfaßt.

5. Anordnung nach Anspruch 4, **dadurch gekennzeichnet, daß** der Spiegel (22) der Optikeinrichtung (7; 23) als eine reflektierende Beschichtung auf einer gekrümmten und dem Lichtmodulator (12; 13; 14) abgewandten Grenzfläche eines transparenten Optikelements der Optikeinrichtung (7; 23) ausgebildet ist.

6. Anordnung nach einem der Ansprüche 1 bis 5, **dadurch gekennzeichnet, daß** die Optikeinrichtung (7; 23) eine katadioptrische Optik ist.

7. Anordnung nach einem der Ansprüche 1 bis 6, **dadurch gekennzeichnet, daß** die Lichtquelle (1) mehrfarbiges Licht abgibt, das eine Farbeinheit (9; 40) zwischen der Optikeinrichtung (7; 23; 31; 33; 34) und dem Lichtmodulator (12; 13; 14) angeordnet ist und daß ein zweiter Lichtmodulator (13) der Farbeinheit (9; 40) nachgeschaltet ist, wobei die Farbeinheit (9; 40) über die Optikeinrichtung (7; 23; 31; 33; 34) mit Licht des leuchtenden Feldes beaufschlagbar ist und davon Licht einer ersten Farbe ausgekoppelt und auf den ersten Lichtmodulator (12) lenkt und Licht einer zweiten Farbe auskoppelt und auf den zweiten Lichtmodulator (13) lenkt, wobei die Lichtmodulatoren (12; 13; 14) das auf sie fallende Licht modulieren, um jeweils ein Farbteilbild einzustellen, und das modulierte Licht zurück zur Farbeinheit (9; 40) reflektieren, die das reflektierte Licht zu einem gemeinsamen Strahlenbündel überlagert und zur Optikeinrichtung (7; 23; 31; 33; 34) leitet.

8. Anordnung nach Anspruch 7, **dadurch gekennzeichnet, daß** die Anordnung noch einen dritten der Farbeinheit (9; 40) nachgeschalteten Lichtmodulator (14) aufweist, wobei die Farbeinheit (9; 40) Licht einer dritten Farbe aus dem Licht, mit dem sie beaufschlagt wird, auskoppelt und auf den dritten Lichtmodulator (14) lenkt, der das auf ihn fallende Licht moduliert, um ein drittes Farbteilbild einzustellen, und das modulierte Licht zurück zur Farbeinheit (9; 40) reflektiert.

9. Anordnung nach Anspruch 8, **dadurch gekennzeichnet, daß** auf dem ersten Lichtmodulator (12) ein rotes Farbteilbild, auf dem zweiten Lichtmodulator (13) ein grünes Farbteilbild und auf dem dritten Lichtmodulator (14) ein blaues Farbteilbild einstellbar ist.

10. Anordnung nach einem der Ansprüchen 1 bis 9, **dadurch gekennzeichnet, daß** die Lichtmodulatoren (12; 13; 14) den Polarisationszustand des auf sie fallenden Lichtes modulieren und daß ein der Zwischenbildebene (ZE) vorgeschalteter Analysator (4) vorgesehen ist, der bewirkt, daß nur moduliertes Licht mit einem vorbestimmten Polarisationszustand in die Zwischenbildebene (ZE) gelangt.

11. Anordnung nach Anspruch 10, **dadurch gekennzeichnet, daß** der Analysator (4) zwischen der Zwischenbildebene (ZE) und der Optikeinrichtung (7; 23; 31; 33; 34) angeordnet ist.

12. Anordnung nach Anspruch 10 oder 11, **dadurch gekennzeichnet, daß** der Analysator (4) als Polarisationsteiler verwirklicht ist, der mit dem Licht von dem leuchtenden Feld (3) beaufschlagt wird und davon nur Licht eines ersten Polarisationszustandes zur Optikeinrichtung (7; 23; 31; 33; 34) lenkt und der von dem von der Optikeinrichtung (7; 23; 31; 33; 34) kommenden Licht nur Licht eines zweiten Polarisationszustandes zur Zwischenbildebene (ZE) lenkt.

13. Anordnung nach Anspruch 12, **dadurch gekennzeichnet, daß** das Licht des ersten und zweiten Polarisationszustandes jeweils linear polarisiert ist, wobei die beiden linearen Polarisationszustände um 90° gegeneinander verdreht sind.

14. Anordnung nach einem der Ansprüche 1 bis 13, **dadurch gekennzeichnet, daß** die Optikeinrichtung (7) aus einer Plankonvexlinse (19) und einer verspiegelten Meniskuslinse (20) besteht.

15. ,. Anordnung nach einem der Ansprüche 1 bis 13, **dadurch gekennzeichnet, daß** die Optikeinrichtung (23) einen Konkavspiegel (24) und einen Konvexspiegel (25) aufweist.

16. Anordnung nach Anspruch 15, **dadurch gekennzeichnet, daß** die Konkav- und Konvexspiegel durch verspiegelte Außenflächen eines Glaskörpers verwirklicht sind.

## Claims

1. An assembly for projecting an image onto a projection surface, said assembly comprising a light source (1) emitting light using which a luminous field (3) can be generated, a reflective light modulator (12; 13; 14), onto which light emitted by the luminous field (3) can be directed and which modulates said light in order to generate an image, further comprising projection optics (16) arranged following said light modulator (12; 13; 14), onto which projection optics (16) the modulated light can be directed, in order to project the image onto the projection surface (17), **characterized in that** an optical device (7; 23; 31, 33; 34) is arranged preceding said light modulator (12; 13; 14), said optical device, on the one hand, projecting light coming from the luminous field (3) onto the light modulator (12; 13; 14) and, on the other hand, projecting light modulated by means of the light modulator (12; 13; 14) into an intermediate image plane (ZE), which is arranged preceding the projection optics (16), in order to generate an intermediate image in said intermediate image plane (ZE), which intermediate image can be projected onto the projection surface by the projection optics (16).

2. Assembly according to claim 1, **characterized in that** the optical device (7; 23; 31; 33; 34) is a 1:1 imaging optics.

3. Assembly according to claim 1 or 2, **characterized in that** the optical device (7; 23; 31; 33; 34) is provided symmetrically.

4. Assembly according to any one of claims 1 to 3, **characterized in that** the optical device (7; 23; 31; 33; 34) comprises a curved mirror (22; 24), which is preferably spherically curved.

5. Assembly according to claim 4, **characterized in that** the mirror (22) of the optical device (7; 23) is provided as a reflecting coating on a curved boundary surface of a transparent optical element of the optical device (7; 23), said boundary surface facing away from the light modulator (12; 13; 14).

6. Assembly according to any one of claims 1 to 5, **characterized in that** the optical device (7; 23) is a catadioptrical optics.

7. Assembly according to any one of claims 1 to 6, **characterized in that** the light source (1) emits multi-colored light, **in that** a color unit (9; 40) is arranged between the optical device (7; 23; 31; 33; 34) and the light modulator (12; 13; 14), and **in that** a second light modulator (13) is arranged following the color unit (9; 40), wherein the color unit (9; 40) can have light from the luminous field applied thereon via the optical device (7; 23; 31; 33; 34) and couples out light of a first color therefrom and directs it onto the first light modulator (12), and couples out light of a second color and directs it onto the second light modulator (13), wherein the light modulators (12; 13; 14) modulate the light incident on them, in order to set a partial color image each, and reflect the modulated light back to the color unit (9; 40), which superimposes the reflected light into a common beam and directs it to the optical device (7; 23; 31; 33; 34).

8. Assembly according to claim 7, **characterized in that** the assembly further comprises a third light modulator (14), arranged following the color unit (9; 40), wherein the color unit (9; 40) couples out light of a third color from the light which is applied on it, and directs said light onto the third light modulator (14), which modulates the light incident thereon in order to set a third partial color image and reflects the modulated light back to the color unit (9; 40).

9. Assembly according to claim 8, **characterized in that** a red partial color image can be set on the first light modulator (12), a green partial color image can be set on the second light modulator (13) and a blue partial color image can be set on the third light modulator (14).

10. Assembly according to any one of claims 1 to 9, **characterized in that** the light modulators (12; 13; 14) modulate the polarization condition of the light incident on them, and **in that** an analyzer (4), arranged preceding the intermediate image plane (ZE), is provided, which has the effect that only modulated light having a predetermined polarization condition passes into the intermediate image plane (ZE).

11. Assembly according to claim 10, **characterized in that** the analyzer (4) is arranged between the intermediate image plane (ZE) and the optical device (7; 23; 31; 33; 34).

12. Assembly according to claim 10 or 11, **characterized in that** the analyzer (4) is realized as a polarization splitter, onto which the light from the luminous field (3) is directed of which light it only directs that light having a first polarization condition to the optical device (7; 23; 31; 33; 34) and, of the light coming from the optical device (7; 23; 31; 33; 34), it directs only light having a second polarization condition to the intermediate image plane (ZE).

13. Assembly according to claim 12, **characterized in that** the light of the first and second polarization conditions is respectively linearly polarized, with the two linear polarization conditions being rotated relative to each other around 90°.

14. Assembly according to any one of claims 1 to 13, **characterized in that** the optical device (7) consists of a plan-convex lens (19) and a silvered meniscus lens (20).

15. Assembly according to any one of claims 1 to 13, **characterized in that** the optical device (23) comprises a concave mirror (24) and a convex mirror (25).

16. Assembly according to claim 15, **characterized in that** the concave and convex mirrors are realized by silvered outer surfaces of a glass body.

## Revendications

1. Dispositif pour projeter une image sur une surface de projection, comportant une source de lumière (1) qui délivre une lumière avec laquelle on peut produire un champ lumineux (3), un modulateur de lumière à réflexion (12 ; 13 ; 14) qui peut recevoir la lumière sortant du champ lumineux (3) et module celle-ci pour produire une image et en outre une optique de projection (16) couplée en aval du modulateur de lumière (12 ; 13 ; 14), qui peut recevoir la lumière modulée afin de projeter l'image sur la surface de projection (17), **caractérisé en ce qu'**un dispositif optique (7 ; 23 ; 31 ; 33 ; 34) est couplé en amont du modulateur de lumière (12 ; 13 ; 14), qui d'une part reproduit la lumière provenant du champ lumineux (3) sur le modulateur de lumière (12 ; 13 ; 14) et d'autre part reproduit la lumière modulée au moyen du modulateur de lumière (12 ; 13 ; 14), dans un plan d'image intermédiaire (ZE) situé en amont de l'optique de projection (16), afin de produire, dans le plan d'image intermédiaire (ZE), une image intermédiaire qui peut être projetée par l'optique de projection (16) sur la surface de projection.

2. Dispositif selon la revendication 1, **caractérisé en ce que** le dispositif optique (7 ; 23 ; 31 ; 33 ; 34) est une optique de reproduction 1 : 1.

3. Dispositif selon la revendication 1 ou 2, **caractérisé en ce que** le dispositif optique (7 ; 23 ; 31 ; 33 ; 34) est réalisé symétrique.

4. Dispositif selon l'une des revendications 1 à 3, **caractérisé en ce que** le dispositif optique (7 ; 23 ; 31 ; 33 ; 34) comprend un miroir courbé (22 ; 24) qui est de préférence sphérique.

5. Dispositif selon la revendication 4, **caractérisé en ce que** le miroir (22) du dispositif optique (7 ; 23) est réalisé comme revêtement réfléchissant sur une surface limite courbée et tournée à l'opposé du modulateur de lumière (12 ; 13 ; 14), d'un élément optique transparent du dispositif optique (7 ; 23).

6. Dispositif selon l'une des revendications 1 à 5, **caractérisé en ce que** le dispositif optique (7 ; 23) est une optique à catadioptre.

7. Dispositif selon l'une des revendications 1 à 6, **caractérisé en ce que** la source de lumière (1) délivre une lumière polychrome, **en ce qu'**une unité couleur (9 ; 40) est disposée entre le dispositif optique (7 ; 23 ; 31 ; 33 ; 34) et le modulateur de lumière (12 ; 13 ; 14), et **en ce qu'**un deuxième modulateur de lumière (13) est couplé en aval de l'unité couleur (9 ; 40), l'unité couleur (9 ; 40) pouvant recevoir, à travers le dispositif optique (7 ; 23 ; 31 ; 33 ; 34), la lumière du champ lumineux, et extrait de celle-ci une lumière d'une première couleur et la dirige sur le premier modulateur de lumière (12), et extrait une lumière d'une deuxième couleur et la dirige sur le deuxième modulateur de lumière (13), les modulateurs de lumière (12 ; 13 ; 14) modulant la lumière incidente pour régler dans chaque cas une image partielle couleur, et réfléchissant la lumière modulée en retour vers l'unité couleur (9 ; 40) qui superpose la lumière réfléchie pour former un faisceau de rayons commun et la dirige vers le dispositif optique (7 ; 23 ; 31 ; 33 ; 34).

8. Dispositif selon la revendication 7, **caractérisé en ce que** le dispositif comporte encore un troisième modulateur de lumière (14) couplé en aval de l'unité couleur (9 ; 40), l'unité couleur (9 ; 40) extrayant une lumière d'une troisième couleur de la lumière qu'elle reçoit et la dirigeant sur le troisième modulateur de lumière (14) qui module la lumière incidente pour régler une troisième image partielle couleur, et réfléchit la lumière modulée en retour vers l'unité couleur (9 ; 40).

9. Dispositif selon la revendication 8, **caractérisé en ce que** sur le premier modulateur de lumière (12) on peut régler une image partielle de couleur rouge, sur le deuxième modulateur de lumière (13) une image partielle de couleur verte et sur le troisième modulateur de lumière (14), une image partielle de couleur bleue.

10. Dispositif selon l'une des revendications 1 à 9, **caractérisé en ce que** les modulateurs de lumière (12 ; 13 ; 14) modulent l'état de polarisation de la lumière incidente et **en ce qu'**un analyseur (4), couplé en amont du plan d'image intermédiaire (ZE) est prévu, qui fait que seule la lumière modulée avec un état de polarisation prédéterminé parvient dans le plan d'image intermédiaire (ZE).

11. Dispositif selon la revendication 10, **caractérisé en ce que** l'analyseur (4) est disposé entre le plan d'image intermédiaire (ZE) et le dispositif optique (7 ; 23 ; 31 ; 33 ; 34).

12. Dispositif selon là revendication 10 ou 11, **caractérisé en ce que** l'analyseur (4) est réalisé comme diviseur de polarisation qui reçoit la lumière du champ lumineux (3) et dirige de celle-ci uniquement la lumière d'un premier état de polarisation, vers le dispositif optique (7 ; 23 ; 31 ; 33 ; 34), et dirige, de la lumière provenant du dispositif optique (7 ; 23 ; 31 ; 33 ; 34) vers le plan d'image intermédiaire (ZE), uniquement la lumière d'un deuxième état de polarisation.

13. Dispositif selon la revendication 12, **caractérisé en ce que** la lumière du premier et du deuxième état de polarisation est polarisée chaque fois de façon linéaire, les deux états de polarisation linéaire étant tournés de 90° l'un par rapport à l'autre.

14. Dispositif selon l'une des revendications 1 à 13, **caractérisé en ce que** le dispositif optique (7) est constitué d'une lentille convexe plane (19) et d'une lentille ménisque (20) rendue réfléchissante.

15. Dispositif selon l'une des revendications 1 à 13, **caractérisé en ce que** le dispositif optique (23) comporte un miroir concave (24) et un miroir convexe (25).

16. Dispositif selon la revendication 15, **caractérisé en ce que** le miroir concave et le miroir convexe sont réalisés par des surfaces extérieures rendues réfléchissantes d'un corps en verre.
